Europäisches Patentamt

European Patent Office

Office européen des brevets

(11) Publication number: **0 100 372**
A1

## (12) EUROPEAN PATENT APPLICATION

(21) Application number: **82107045.5**

(22) Date of filing: **04.08.82**

(51) Int. Cl.³: **F 22 B 31/04**
F 22 B 7/12, F 23 C 1/00
F 23 B 5/02, F 23 G 5/00

(43) Date of publication of application:
**15.02.84** Bulletin **84/7**

(84) Designated Contracting States:
**BE DE FR IT SE**

(71) Applicant: **THORN EMI ENERGY DEVELOPMENTS
LIMITED
P.O. Box 4 Burton Works
Dudley West Midlands DY3 2AD(GB)**

(72) Inventor: **Northcote, Reginald Dennis
57 Springhill Park
Lower Penn Wolverhampton(GB)**

(72) Inventor: **Tatem, John Arthur
20 Pinfold Lane
Penn Wolverhampton(GB)**

(74) Representative· **Marsh, Robin Geoffrey et al,
Thorn EMI Patents Limited The Quadrangle Westmount
Centre Uxbridge Road
Hayes Middlesex, UB4 0HB(GB)**

(54) Improvements relating to boilers.

(57) A shell boiler comprising a furnace tube (15) within the steam and or water space (11) of the boiler and a plurality of smoke tubes characterised in that the boiler is provided with secondary feed means (61, 26a, 34) to feed a secondary fuel into the furnace tube (15) at a quiescent zone where the products of combustion have a minimum velocity and usually adjacent a front end (19) of the furnace tube (15). The secondary fuel is preferably hospital ward, or pathological waste. Solid primary fuel may be fed to a furnace grate (16) in the furnace tube (15) and there may be means (50) to separate fine particles of product fuel from the remainder of the solid fuel and feed the fine particles with the secondary fuel into the furnace tube (15).

FIG 1

EP 0 100 372 A1

Title: "Improvements relating to boilers"

This invention relates to shell boilers of the type, comprising an outer continuous shell within which is contained the steam and/or water space of the boiler, a furnace tube, and a plurality of smoke tubes for passage therethrough of products of combustion of the furnace, the boiler having means to fire the boiler in the furnace tube

An object of the present invention is to provide a new and improved boiler of the type described and can be adapted for burning hospital, or other organic, and/or pathological waste.

According to the present invention, we provide a shell boiler characterised in that the boiler is provided with secondary feed means to feed a secondary fuel into the furnace tube at a quiescent zone.

By "a quiescent zone" we mean a region of the furnace tube where the products of combustion have a minimum velocity which is usually adjacent a front end of the furnace tube.

The secondary fuel may be hospital ward waste which normally comprises organic waste such as textile and/or paper etc. and a shredding means may be provided so that the incoming hospital ward waste is shredded before being fed by the pneumatic feed means along said conduit.

Pathological waste may also be processed by the shredding means for delivery into the pneumatic feed means.

Preferably the secondary feed means includes an inlet duct so that the secondary fuel is introduced into the furnace tube in a direction lying in a plane transverse to the longitudinal axis of the furnace tube, for example at an angle of from $90^\circ$ to $180^\circ$ to a horizontal vector of the direction of flow of the products of combustion from the tube.

The secondary fuel may be fed to said duct along a conduit by a pneumatic transport means which provides a flow of transport air to feed said fuel along said conduit.

Alternatively means may be provided to introduce the secondary fuel into the furnace chamber through an opening in the front end of the furnace tube.

The means may include a guide means insertable through said opening and arranged to prevent contact between secondary fuel, such as pathological waste, and the walls of the furnace tube and entrance thereto.

The guide means may comprise a rotatable container mounted on transport means whereby the container may be loaded with secondary fuel and then introduced through said opening of the furnace tube following which the container is rotated about a generally horizontal axis so as to deposit the secondary fuel in the furnace tube.

Alternatively the guide means may comprise a tubular member insertable into the entrance opening through which the secondary fuel is manually loaded into the furnace tube.

The furnace tube may contain a furnace grate and the boiler may have an apparatus for feeding solid fuel to the furnace grate downwardly to the steam and/or water space of the boiler.

The boiler may be provided with a means for classifying and separating the solid fuel, which provides the primary fuel of the boiler by separating fine particles of fuel below a predetermined size from the remainder of the fuel and feeding said separated fine particles into the furnace tube at a different location to the remainder of the primary fuel.

The fuel feed means may comprise a first conduit extending downwardly from the fuel classifying and separating means through the roof of the furnace tube, pneumatic transport means to provide a flow of transport air to feed fuel along a second conduit to the fuel

01.00372

classifying and separating device and a third conduit extending from the fuel classifying and separating device to a fines-air separating means for separating the fine particles from the transport air.

Said fine particles may be introduced at the same location and may be introduced by the same conduit as the secondary fuel.

The boiler may be provided with a grit arrestor arranged to extract grit entrained in the products of combustion of the boiler and means to feed the extracted grit into the furnace tube.

Said fine particles of fuel may be fed into the furnace tube with the extracted grit.

The grit arrestor may be located at a rear end of the boiler

Said fine particles may be fed to the grit arrestor and both said fine particles and the extracted grit being fed from the grit arrestor to the furnace tube.

When the furnace is provided with a grit arrestor, the fines-air separating means may be connected thereto so that the fines are fed to the grit arrestor whilst the air is fed to the intake side of a fan which provides said pneumatic transport air.

The fine particles, or extracted grit, or fine particles and extracted grit, may be introduced into the furnace tube in a direction at any angle from $90^{\circ}$ to $180^{\circ}$ to the horizontal vector of the direction of flow of the products of combustion from the furnace tube.

The secondary fuel may be fed into the furnace tube with the extracted grit or with the extracted grit and fine particles.

The secondary fuel may be fed to the grit arrestor and the secondary fuel and the extracted grit or secondary fuel, extracted grit and fine particles, fed together from the grit arrestor into the furnace tube.

The grit or fine particles, or fine particles and grit or secondary fuel and grit, or secondary fuel, grit and fine particles may be fed into the furnace tube by a pneumatic transport means, the transport air of which is provided by a main combustion air fan of the boiler or by a separate fan.

The invention will now be described in more detail by way of example, with reference to the accompanying drawings, wherein:-

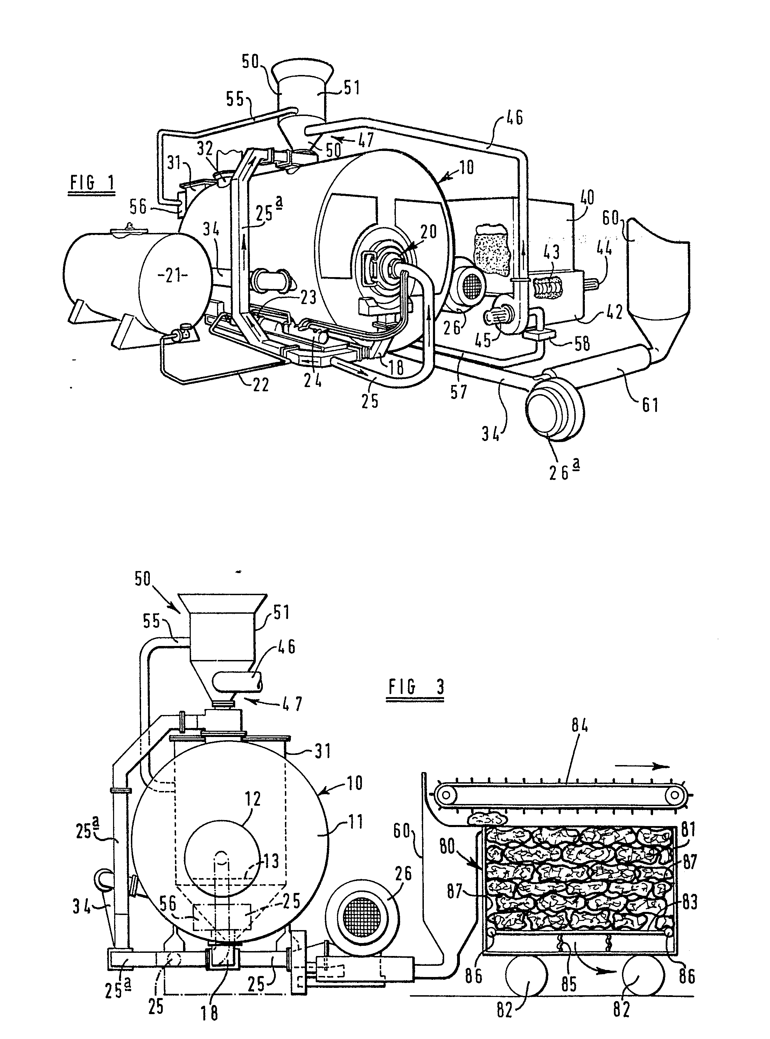

FIGURE 1 is a perspective view of a boiler embodying the invention;

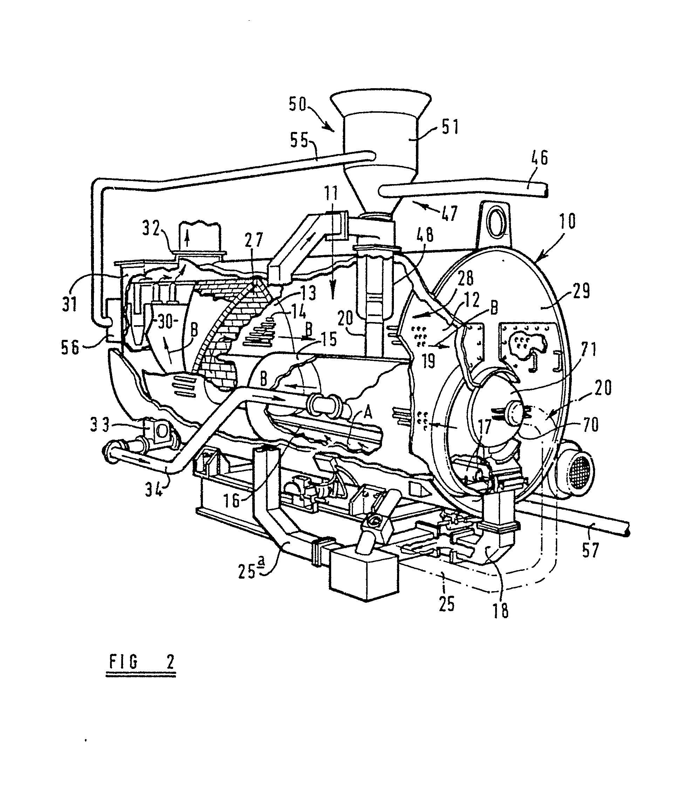

FIGURE 2 is a perspective view, partly broken away, of the boiler of Figure 1; and

FIGURE 3 is a front elevation of the boiler of Figure 1.

Referring to the drawings, there is shown a shell boiler comprising an enveloping shell 10, the majority of which encloses a steam drum or water space 11. Positioned within the shell 10 are tube plates 12, 13 between which extend a plurality of series of smoke tubes 14 as well as a cylindrical combustion or furnace tube 15. Positioned within the combustion tube 15 is a grate 16 to the underside of which is fed primary air through tubes 17 and a duct 18 as shown by the arrows A.

The furnace illustrated in the drawings is a multi-fuel furnace and accordingly the furnace or combustion tube 15 is provided at its front end 19 with an oil burner 20 to which oil is fed under pressure from an oil tank 21 through a line 22 containing a pump 23 and an electrical pre-heater 24.

A burner air supply duct 25 extends from a blower 26 and is arranged to feed burner air into the combustion tube 15 along a horizontal axis coincident with the axis of the oil burner 20. The hereinbefore mentioned primary air duct 18 branches from the burner air supply duct 25.

Between the rear end wall of the shell 10 and the tube plate 13 is provided a first smoke box 27 so that the products of combustion from the furnace tube 15 pass, as shown by the arrows B, into the smoke box 27 and then through a first series of the smoke tubes 14 arranged parallel to the axis of the furnace tube 15 to a second smoke box 28 provided between the tube plate 12 and the front end wall 29 of the shell. The products of combustion then pass through a further series of the smoke tubes 14 to a chamber 30 at the rear of the boiler and this chamber contains a grit arrestor 31 for separating grit from the combustion products which then pass through a flue 32 and hence into a chimney (not shown).

The grit from the grit arrestor 31 passes through a rotary valve 33 into a conduit 34, which extends from a blower 26a to the furnace tube 15 at a position adjacent the front end 19 thereof, so that as the rotary valve rotates a batch of grit (and fine particles as hereinafter to be described) are introduced into the conduit 34. For example the rotary valve may have 6 pockets and rotate at 20 r.p.m. Thus, the grit (and fine particles) and secondary fuel are introduced into the combustion tube 15 at a position adjacent the front of the furnace which is a quiescent zone. Alternatively, in place of the rotary valve 33, a venturi device may be provided so that a venturi action provides suction to draw grit ( and fine particles) from the arrestor 31.

Solid fuel such as coal is contained within a hopper 40. At the base of the hopper is located a screw conveyor 43 driven by a motor. The conveyor 43 is arranged to deliver the fuel to a feed pipe 46 leading from a pneumatic blower 45 to a feeding apparatus 47 so that the fuel is fed pneumatically to the feeding apparatus 47 i.e. the fuel is carried along by a flow of transport air provided by the blower 45.

The apparatus 47 includes a first conduit 48 which extends vertically downwardly through the shell 10 and water space 11 of the boiler and passes through the roof of the furnace tube 15. Suitable means (not shown) are provided to distribute the fuel evenly over the grate 16. Secondary combustion air, supplied through a branch 25a of the duct 25, is fed into the furnace tube 15 through passageways associated with the conduit 48.

The apparatus 47 also includes a classifying and separating means 50 which separates fine particles of fuel below a predetermined size from the remainder of the fuel.

The classifying and separating means 50 comprises a chamber 51 which extends vertically upwardly and is of such internal configuration so as to provide a low pressure zone in which the velocity of the air is reduced. Thus only fine particles of fuel, of approximately 2mm or less in size, will be carried upwardly and hence will be separated from the remainder of the fuel.

The separated fine particles and the transport air are fed via a third conduit 55 to a fines-air separating means 56 mounted on the main grit arrestor 31 whilst the remainder of the fuel is fed into the furnace tube 15 via the conduit 48.

The fines-air separating means 56 feeds the separated fine particles into the main grit arrestor 31 whilst the transporting air is fed via a conduit 57 to the intake of the fan 45.

A restricting throat is provided in the conduit 57, of a suitable size to provide the necessary degree of pressure upstream of the throat. A throat of the necessary size is introduced into the conduit 57 during assembly/commissioning of the boiler and does not thereafter require to be changed.

In addition, a damper controlled additional air feed 58 is provided whereby additional air is fed to the intake of the fan 45 to replace air lost in the fuel feed circuit, such as that escaping into the hopper 40 through the screw conveyor 43. In practice approximately 5% of the air leaving the blower 45 is lost and hence approximately 5% needs to be added through the additional air feed means 58.

The separated fine particles are fed with the grit from the grit arrestor 31 as described hereinbefore.

In addition, there is provided a means for feeding a secondary fuel to the boiler. The secondary fuel may comprise organic waste, and in particular hospital ward waste not containing human waste but containing textiles paper etc. to the boiler. Besides said ward waste, hospitals produce pathological waste and the boiler is also adapted to burn such waste. The means for feeding the secondary fuel comprises a shredding device 60 in which the hospital waste, which is normally fed to the shredding device 60 in bags of approximately 35lb weight, is shredded into pieces of material of approximately one inch square, which pieces are fed by a screw conveyor 61 which regulates the input of secondary fuel feed, to the blower 26a.

When it is desired to burn hospital waste, the screw conveyor 61 is caused to operate to feed the shredded hospital waste to the blower 26a so that it is transported by the pneumatic air along the conduit 34 past the grit arrestor 31 and into the furnace tube 15 at a position adjacent the front end thereof along with the grit and fine particles fed into the conduit 34 by the rotary valve 33.

Of course, if desired, the screw conveyor 61 may draw shredded hospital ward waste from a hopper, the waste having been shredded previously either on site or off site.

In an alternative embodiment (not shown) a screw conveyor 61 to regulate the input of secondary fuel is not provided, but the input is regulated by careful selection of the size and capacity of the shredding device 60. In either embodiment, the waste material may contain metallic or other heavy materials which are difficult to convey in an air stream. Thus a magnetic separator and/or a separator/classifier may be provided at the outlet of the shredding device 60 to separate and remove the metallic and/or heavy material from the secondary fuel.

Alternatively the secondary fuel may be introduced into the boiler through the front end 19 thereof at which the oil burner 20 is provided. The oil burner 20 is provided in a door 70 which can be opened and the secondary fuel introduced through the thus exposed opening 71 for example using a suitable chute.

If desired all or only part of the total amount of secondary fuel may be fed to the boiler through the opening 71. For example where the secondary fuel includes pathologial waste then the pathological waste may be fed through the opening 71 and the remainder of the secondary fuel fed via the shredder and conduit 34.

The guide may comprise a simple tubular chute, having a flared entry end, which is arranged to be introduced through the opening 71 so that, for example, pathological waste can be introduced into the furnace tube 15 without contact of the hot entrance to the combustion tube 15.

Alternatively the guide may comprise a container mounted on a wheeled trolley and the container being in the form of a generally trough shaped receptacle and mounted for rotation about a horizontal axis. In this case the receptacle is loaded with pathological waste, or other secondary fuel which is desired to add, and the trolley wheeled forward so that the receptacle projects into and through the entrance to the furnace tube 15. The receptacle is then rotated so as to cause the pathological waste or other secondary fuel to fall from the receptacle within the furnace tube 15 under the influence of gravity.

Although in the above described example the extracted grit, fine particles and secondary fuel are all fed together into the furnace tube 15 along the conduit 34 if desired they may be fed separately or any desired combination of two may be fed together and the remaining one fed separately. Further, if desired, the boiler may be provided with a primary fuel classifying and separating means such as that illustrated at 50; in which case the grit and secondary fuel may be added together or separately.

It is preferred that however the grit, fine particles and secondary fuel are fed to the furnace tube that each of them which are fed to the furnace tube is introduced into a quiescent zone of the furnace tube and preferably at an angle inclined from $90^{\circ}$ to $180^{\circ}$ to the direction of flow of the products of combustion from the furnace tube.

However, instead of feeding the secondary fuel and/or grit and/or fine particles into the furnace tube at said angle of from $90^{\circ}$ to $180^{\circ}$ to said direction of flow of the products of combustion, one or more of the secondary fuel, grit and fine particles may be fed into the furnace tube at some other angle for example at some angle lying in the range from $90^{\circ}$ to $0^{\circ}$ to said direction of flow of the products of combustion. For example, the conduit 34 could be arranged to enter the furnace tube 15 from the front end of the boiler. In which case all three of the secondary fuel, grit and fine particles would be thus introduced into the boiler. Alternatively, the secondary fuel may be introduced into the furnace tube at said angle of from $90^{\circ}$ to $0^{\circ}$ to said direction of flow of the products of combustion separately from the grit and/or fine particles and the grit and/or fine particles may be added together or separately to the furnace tube at any desired location and in any desired direction.

It is preferred that a pneumatic transport means is provided to feed the grit, fine particles and secondary fuel or a desired combination thereof to the furnace tube and preferably using transport air obtained from a specially provided blower described above or by using the main combustion air supply blower 26. In the latter case the conveyor 61 would extend to the main blower 26 and the conduit 34 would extend therefrom.

Instead of feeding the primary fuel pneumatically it may be fed by a screw conveyor or by any other means. Similarly the grit, fine particles and secondary fuel or desired combinations thereof may be fed into the furnace tube by means other than pneumatic feed means such as by means of a screw conveyor.

A transporter 80 may be provided comprising a body 81 having support means such as wheels 82 to enable it to be transported, for example, around a hospital site. Thus the body 81 can be loaded with waste, for example bags of ward and/or pathological waste at appropriate parts of the hospital site and then the transporter 80 brought to the shredder 60.

The transporter body 81 preferably has a rising bottom 83 to push the contents upwardly into contact with a rubber slatted conveyor 84 whereby the contents are fed directly into the shredder 60. As a result of control of the speed of the conveyor 84 etc. the transporter contents may be fed in a controlled manner into the shredder 60. The bottom 83 may be raised by any suitable means such as an inflatable air bag 85 or by hydraulic, pneumatic or screw jack means. To facilitate easy movement of the bottom 83 guide rollers 86 are provided at each corner to guide the bottom 83 relative to the walls 87 of the body 81.

CLAIMS

1. A boiler comprising an outer continuous shell (10) within which is contained the steam and/or water space (11) of the boiler, a furnace tube (15) and a plurality of smoke tubes (14) for passage therethrough of products of combustion of the furnace tube (15), means to fire the boiler in the furnace tube (15), characterised in that the boiler is provided with secondary feed means (61, 26a, 34) to feed a secondary and different fuel to the first fuel into the furnace tube (15) at a quiescent zone (as herein defined).

2. A boiler according to Claim 1 characterised in that the secondary fuel is hospital ward waste comprising non-pathological organic waste and/or pathological waste.

3. A boiler according to Claim 1 or Claim 2 characterised in that a shredding means (60) is provided to which the secondary fuel can be fed for shredding before being fed into the furnace tube (15).

4. A boiler according to any one of Claims 1 to 3 characterised in that the secondary feed means includes an inlet duct so that the secondary fuel is introduced into the furnace tube (15) in a direction lying in a plane transverse to the longitudinal axis of the furnace tube (15) at an angle from 90° to 180° to a horizontal vector of the direction of flow of the products of combustion from the tube (15) the secondary fuel being fed to said duct along a conduit by a pneumatic transport means (26a) to provide a flow of transport air to feed said fuel along said conduit (34).

5. A boiler according to any one of Claims 1 to 3 characterised in that means (70) are provided to introduce the secondary fuel into the furnace tube (15) through an opening (71) in the front end (19) of the furnace tube (15) which front opening (71) is normally closed, the means including a guide means insertable through said opening (71) and arranged to prevent contact between the secondary fuel and the walls of the furnace tube (15) and entrance thereto.

6. A boiler according to any one of the preceding claims characterised in that the furnace tube (15) contains a furnace grate (16) and the boiler has apparatus (47) for feeding solid fuel to the furnace grate (16) downwardly through the steam and/or water space (11) of the boiler, the boiler being provided with a means (50) for classifying and separating the solid fuel, which provides a primary fuel of the boiler, by separating fine particles of fuel, having a particle size below a predetermined size, from the remainder of the fuel and feeding said separated fine particles into the furnace tube (15) at a different location to the remainder of the primary fuel.

7. A boiler according to Claim 6 characterised in that said fine particles and/or grit are introduced into the furnace tube (15) at the same location as the secondary fuel.

8. A boiler according to Claim 6 or Claim 7 characterised in that the fine fuel particles are fed into the furnace tube (15) by pneumatic transport means (57,45).

9. A boiler according to any one of Claims 6 to 8 characterised in that valve means are provided to mix discrete masses of fine fuel particles to a supply of secondary fuel so as to be fed therewith to the furnace tube (15).

0100372

10. A boiler according to any one of the preceding claims when dependent upon Claim 3 characterised in that a conveyor (84) is provided to feed secondary fuel into said shredding means (60), the conveyor (84) being adapted to feed secondary fuel from a transporter (80) disposed, in use, in operative relationship with the conveyor (84) so as to convey secondary fuel from the transporter (80) into the shredder (60), said transporter (80) being provided with wheels (82) or the like to permit of movement of the transporter (80) from a collection station to said position in said operative relationship with the conveyor (80).

FIG 1

FIG 3

2/2

FIG 2

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,X | GB-A-2 092 725 (PARKINSON COWAN GWB)<br>* Claims 1-9, 12-16, 23, 25 *<br>--- | 1-9 | F 22 B 31/04<br>F 22 B 7/12<br>F 23 C 1/00<br>F 23 B 5/02<br>F 23 G 5/00 |
| A | GB-A-1 557 866 (PARKINSON COWAN GWB)<br>* Page 2, line 124 - page 4, line 2 *<br>--- | 1,5,6 | |
| A | DE-A-2 630 728 (INTERLIZ ANSTALT)<br>----- | | |

| | TECHNICAL FIELDS SEARCHED (Int. Cl. ³) |
|---|---|
| | F 22 B 7/00<br>F 22 B 31/00<br>F 23 B 5/00<br>F 23 C 1/00<br>F 23 G 3/00<br>F 23 G 5/00<br>F 23 K 3/00<br>F 24 H 1/00 |

The present search report has been drawn up for all claims

| Place of search | Date of completion of the search | Examiner |
|---|---|---|
| BERLIN | 15-03-1983 | PIEPER C |